# EUROPÄISCHE PATENTSCHRIFT

(11) **EP 3 693 150 B1**
(45) Veröffentlichungstag und Bekanntmachung des Hinweises auf die Patenterteilung: **31.08.2022**
(21) Anmeldenummer: 20155858.2
(22) Anmeldetag: 06.02.2020
(51) Int. Cl.: B29C 48/76, B29C 48/39, B29C 48/25, B29C 48/285, B29C 48/395, B29B 13/00, B29B 7/48, B29B 7/84, B29B 7/90

(54) **SEITENDOSIERER MIT GETRENNTEN DRUCKBEREICHEN ZUR ENTGASUNG**
SIDE FEEDER WITH SEPARATE PRESSURE AREAS FOR DEGASSING
DISPOSITIF D'ALIMENTATION LATÉRALE POURVU DE ZONES DE PRESSION SÉPARÉES POUR LE DÉGAZAGE

(30) Priorität: 06.02.2019 DE 102019102976
(43) Veröffentlichungstag der Anmeldung: 12.08.2020
(73) Patentinhaber: Extricom Extrusion GmbH, 74348 Lauffen am Neckar (DE)
(72) Erfinder: Bauer, Thomas, 74080 Heilbronn (DE); Erdmann, Michael, 74348 Lauffen a.N. (DE)
(74) Vertreter: LS-MP von Puttkamer Berngruber Loth Spuhler

(56) Entgegenhaltungen:
- EP-A1- 2 810 757
- DE-A1-102013 208 993
- DE-U1-202007 011 767
- JP-A- H11 245 283
- JP-A- 2003 080 584

## Beschreibung

Die Erfindung betrifft eine Schneckenmaschine mit einem Entgasungsgehäuse mit den Merkmalen des Oberbegriffs des Anspruchs 1; des Weiteren betrifft die Erfindung ein Verfahren zur Aufbereitung von Schüttgut nach dem Oberbegriff des Anspruchs 24.

Die JP 2003 080584 A offenbart ein Verfahren zur Herstellung eines mit Holzmehl gemischten thermoplastischen Harz-Spritzformteils. Das Verfahren umfasst den Schritt des Zuführens eines thermoplastischen Harzes und des Holzmehls. In einem Überführungsschritt wird das zugeführte Harz und das Holzmehl weiter transportiert, während eine Gaskomponente und die Feuchtigkeit entfernt werden. In einem Knetschritt wird das Harz durch Erhitzen aufgeschmolzen, das zugeführte Harz und das Holzmehl miteinander verknetet und eine geschmolzene Zusammensetzung hergestellt. Es folgt ein Dosierschritt, in dem die geschmolzene Zusammensetzung dosiert wird während das Gas aus der geschmolzenen Zusammensetzung abgezogen wird. In einem weiteren Schritt wird die Gussform hergestellt, indem das geschmolzene und vom Gas befreite Harz durch die Dosiereinheit unter einem Druck von 0,5 bis 100 MPa zudosiert wird.

Eine derartige Schneckenmaschine ist aus der europäischen Patentschrift EP 1 977 877 bekannt. Diese Druckschrift beschreibt ein Verfahren zum Zuführen von pulverförmigem Schüttgut in einen Extruder, der über ein Gehäuse mit zueinander parallelen, einander teilweise durchdringenden Bohrungen mit darin angeordneten Schneckenwellen verfügt. Das Gehäuse weist eine Zuführöffnung auf, der eine Einzugszone nachgeordnet ist. In der Einzugszone erfolgt eine Feststoff-Förderung von pulverförmigem Schüttgut unter TeilFüllung dieser Einzugszone. Diese weist einen gasdurchlässigen Wandabschnitt auf, an dem eine Schüttgut-Schicht ohne Durchlass von Schüttgut durch diesen Wandabschnitt erzeugt wird. Der Wandabschnitt weist eine Innenwand auf, die die Bohrung begrenzt, wobei ein Spalt gegenüber der Bohrungswand gebildet wird, der mit einem Teil-Kreisring-Querschnitt zurückversetzt ist. Der gasdurchlässige Wandabschnitt ist mittels einer Druck-Spül-Leitung an einer Druckgasquelle angeschlossen.

Ein damit zusammenhängender Stand der Technik ist in der europäischen Patentschrift EP 2 218 568 B1 beschrieben, die sich mit der Ausgestaltung des Vakuum-Gehäuse-Abschnitts befasst und dabei einen dort eingesetzten Filter in Form eines Metall-Vlieses vorsieht. Durch den Einsatz eines Metall-Vlieses soll eine deutlich höhere Filterfeinheit erreicht werden, als dies beim Einsatz von Sinter-Metallen der Fall ist, wodurch sich die technische Lehre der europäischen Patentschrift EP 2 218 568 von derjenigen des EP 1 977 877 B1 unterscheidet. Weiterhin soll der Austausch eines solchen sehr dünnen Metall-Vlieses mit relativ wenigen Handgriffen möglich sein für den Fall, dass trotz der Filterfeinheit Verstopfungen infolge der Schüttgut-Partikel auftreten. Dieser Vakuum-Gehäuse-Abschnitt ist in einer Schneckenmaschine zur Behandlung von zumindest teilweise pulverförmigem Schüttgut vorgesehen, die hierfür ausgelegt ist.

Das Dokument DE 10 2013 208 993 A1 bezieht sich auf eine Schneckenmaschine, ein Verfahren zur Aufbereitung von Schüttgut sowie auf eine Aufbereitungsanlage zur Aufbereitung von Schüttgut. Der Fokus dieses Standes der Technik liegt auf der Ausgestaltung eines Vakuum-Filtereinsatzes, der ein Schutzelement zur Anpassung an die mindestens eine Gehäusebohrung im Querschnitt teilweise in Form eines Teil-Kreisbogens vorsieht. Hierdurch soll eine lange Standzeit des Vakuum-Filtereinsatzes gewährleistet werden. Indem das Schutzelement in der Querschnittform entsprechend der mindestens einen Gehäusebohrung ausgebildet ist, kann das Schüttgut bei Betrieb der Schneckenmaschine mittels eines Behandlungselements von dem Schutzelement abgestreift werden. Dadurch werden an das Schutzelement angesaugte Schüttgut-Partikel ständig von dem Behandlungselement mitgenommen, sodass eine ständige Reinigung des Schutzelements stattfindet.

Eine Schneckenmaschine mit Entgasungsvorrichtung, die einem anderen Technologie-Prinzip folgt, ist weiterhin in dem Dokument EP 2 860 013 B1 offenbart, bei dem eine sogenannte Rückwärts-Entlüftung vorgesehen ist, die durch eine Gebläse-Einrichtung erzeugt wird, die eine Gasströmung bewirkt, die entgegen der Förderrichtung des mit der Förderschneckenwelle geförderten Gutes wirkt.

Abgesehen von diesem in der EP 2 860 013 B1 angesprochenen Stand der Technik, der einem anderen Wirkprinzip folgt, sind die Schneckenmaschinen nach dem Stand der Technik sehr kompliziert konstruiert und damit sehr teuer. Die danach teilweise vorgesehenen Schutzelemente sind zusätzliche Bauteile, die zudem eine auch im harten Dauerbetrieb solcher Schneckenmaschinen kaum erfüllbare Passgenauigkeit voraussetzten, was die Notwendigkeit regelmäßigen Austausches und Wieder-Einsetzens auch im laufenden Betrieb voraussetzt. Wegen der teilweise extrem hohen Temperaturen sind solche Austauscharbeiten mit einem hohen Gefährdungspotential für die jeweilige Bedienperson verbunden. Zudem setzen die Anlagen komplizierte Halterungen voraus.

Bezogen auf die Baulänge, d.h. die Länge des Schneckenmaschinengehäuses, steht bei diesem Stand der Technik weiterhin eine relativ kleine Filterfläche zur Verfügung, die zu einem schnellen Verstopfen im laufenden Betrieb führen kann, verbunden mit der Notwendigkeit häufiger Unterbrechungen des Extrusionsverfahrens zum Zwecke des Austausches. Unterbrechungen im laufenden Extrusionsverfahren können aber negative Auswirkungen auf das Extrudat haben und verursachen erhebliche Zusatzkosten. Ferner ist die Freiheit bei der Auswahl von Filtermaterialien eingeschränkt.

Ausgehend von diesen Nachteilen des Standes der Technik stellt sich der Erfindung mithin das technische Problem, diese Nachteile zu vermeiden und eine Schneckenmaschine mit hochflexibler, robuster Entgasungseinrichtung zur Verfügung zu stellen, die zudem kostengünstig herstellbar ist.

Weiterhin soll eine solche Entgasungseinrichtung für Seitenstrombeschickungsmaschinen, für die sich auch der Begriff SideFeeder eingebürgert hat, wie auch für Hauptschneckenmaschinen, z.B. Hauptextruder, verwendbar sein. Zudem soll die Entgasungseinrichtung mit weiteren Anlagenteilen kombiniert werden können.

Insbesondere soll eine große Filterfläche erreichbar sein und es soll ermöglicht werden, einen oder mehrere Unterdruckbereiche oder Druckluftbereiche zur Verfügung zu haben.

Gelöst werden diese verschiedenen Aspekte mit einer Vorrichtung nach Anspruch 1 und mit einem Verfahren nach Anspruch 26. Vorteilhafte Ausgestaltungen der technischen Lehre sind in den Unteransprüchen beschrieben.

Zu diesem Zweck wird eine Schneckenmaschine zur Verfügung gestellt, die ein Gehäuse aufweist, das seinerseits ein Einzugsgehäuse und ein Entgasungsgehäuse vorsieht.

Wenn nachfolgend allgemein von einem Entgasungsgehäuse gesprochen wird, bedeutet dies, dass damit nicht nur die äußere Umhüllung des Gehäuses gemeint ist, sondern dieses funktional eine Entgasungseinrichtung umfasst, die im Weiteren näher unter dem Begriff des Entgasungsgehäuses beschrieben wird, weil insbesondere auch deren räumlich-geometrische Komponenten von Bedeutung sind.

Das Gehäuse umfasst weiterhin wenigstens eine Gehäusebohrung, die im Inneren u.a. des Entgasungsgehäuses verläuft und die wenigstens einen inneren Wandabschnitt aufweist.

Die Gehäusebohrung dient der Aufnahme wenigstens einer Schneckenwelle.

Der wenigstens eine Wandabschnitt der wenigstens einen Gehäusebohrung weist im Bereich des Entgasungsgehäuses wenigstens einen in die wenigstens eine Gehäusebohrung ragenden Trennsteg auf.

Des Weiteren ist im Inneren des Entgasungsgehäuses wenigstens ein Filterelement angeordnet, das die wenigstens eine Schneckenwelle wenigstens teilweise umgreift und das bereichsweise mit seiner äußeren Umfangsfläche an dem vorerwähnten Trennsteg anliegt unter Ausbildung von wenigstens zwei räumlichen Bereichen zur Erzeugung eines fluid bezogenen Druckbereichs, wobei die beiden Bereiche gegeneinander abgedichtet sind.

In einer typischen Ausgestaltung ist die Schneckenmaschine ein Extruder. Deshalb wird nachfolgend die Erfindung anhand eines Extruders beschrieben; es ist aber klar, dass sich die vorliegende Erfindung nicht auf die Ausgestaltung eines Extruders beschränkt, sondern jegliche geeignete Art von Förderschneckenwellen, Schraubenpumpen, Dosierschnecken, Mischer und dergleichen umfasst.

Die Schneckenmaschine dient der Aufbereitung von Schüttgut.

Unter Aufbereitung wird im Sinne der vorliegenden Erfindung der Transport und/oder die Weiterverarbeitung des Schüttguts verstanden.

Unter Schüttgut wird im Sinne der vorliegenden Erfindung ein Material verstanden, das pulverförmig oder staubförmig oder granulatförmig oder Material festen Aggregatzustands, das "gehäckselt" oder geschnitten oder dergleichen ausgestaltet ist sowie Material flüssigen, pastösen oder gelförmigen oder vergleichbaren Aggregatzustands, wobei auch Mischungen dieser verschiedenen Aggregatzustände möglich sind.

Schüttgut im Sinne der vorliegenden Erfindung ist hinreichend im Stand der Technik bekannt und bedarf deshalb keiner weiteren näheren Erläuterung; lediglich beispielhaft soll deshalb darauf hingewiesen werden, dass unter Schüttgut auch etwa geeignet aufbereiteter Kautschuk fällt, der etwa in Streifenform oder als gegebenenfalls vorzerkleinerter Kautschukballen zugegeben wird.

In einer Ausgestaltung der Erfindung ist die Schneckenmaschine eine sogenannte Seitenstrombeschickungsmaschine, also ein sogenannter SideFeeder oder Seitenextruder. In einer bevorzugten Ausgestaltung weist der SideFeeder zwei Schneckenwellen auf, die gleichsinnig oder entgegengesetzt drehen können, die rechts- oder linksdrehend sein können. Statt eines zweiwelligen SideFeeders kann aber auch ein einwelliger SideFeeder oder ein- ebenso bevorzugt - mehrwelliger SideFeeder verwendet werden, also ein SideFeeder, der im Sinne der vorstehenden Beschreibung mehr als zwei Schneckenwellen aufweist; ein solcher mehrwelliger SideFeeder kann insbesondere als sechswelliger oder zwölfwelliger Ringextruder ausgestaltet sein.

Der SideFeeder führt das Schüttgut einer Hauptschneckenmaschine, z.B. einem so bezeichneten Hauptextruder zu, der wiederum ein einwelliger, zweiwelliger, mehrwelliger Extruder sein kann, dessen zwei oder mehr Schneckenwellen gleichsinnig oder entgegengesetzt drehen, links- oder rechtsdrehend sein können. Insbesondere kann der Hauptextruder als RingExtruder mit sechs oder zwölf Schneckenwellen ausgestaltet sein.

Das Schüttgut, das von dem SideFeeder dem Hauptextruder zugeführt wird, erfährt während dieses Prozesses, wie er auch nachfolgend näher beschrieben wird, eine Veränderung, indem jedenfalls das Schüttgut entsprechend der Ausgestaltung der Erfindung entgast wird. Das Schüttgut umfasst mithin Feststoffe, die dem Hauptextruder zugeführt werden. Da - wie erwähnt - das Schüttgut auch Material flüssigen Aggregatzustands umfasst, wird ein solches im Sinne der vorliegenden Erfindung ebenfalls als Feststoff angesehen.

In einer Ausgestaltung der Erfindung weist die wenigstens eine Schneckenwelle bzw. weisen die wenigstens zweiwelligen Schneckenwellen des SideFeeders eine konstante Steigung auf, sodass den Schneckenwellen des SideFeeders im Wesentlichen lediglich eine Transportfunktion zukommt.

In einer anderen Ausgestaltung der Erfindung ist der Aufbau der SideFeeder-Schneckenwelle(n) so ausgestaltet, dass über die reine Transportfunktion hinaus auch eine Weiterverarbeitung stattfinden kann. Vorteilhaft ist es dabei, wenn die SideFeeder-Schneckenwellen segmentiert aufgebaut sind, d.h. wenn die Förderelemente mit unterschiedlichen Schneckenwellensteigungen versehen sind. Die bevorzugt dicht kämmenden Schneckenwellen können bei dieser vorbeschriebenen, eine die Weiterverarbeitung ermöglichenden segmentierten Ausgestaltung neben der die Transportfunktion verwirklichenden Schüttgut-Förderzone eine sich in Förderrichtung anschließende Aufschmelzzone aufweisen, d.h. die Schneckenwellen sind in diesem Bereich der Aufschmelzzone bevorzugt als Knet-Scheiben oder Knet-Blöcke ausgestaltet. In der sich daran anschließenden Zone kann die Schneckenwelle so ausgestaltet sein, dass ein Druckaufbau erfolgt, an deren Ende sich dann beispielsweise eine Austrittsdüse anschließt, mit deren Hilfe das weiterverarbeitete Schüttgut bzw. die Feststoffe der Hauptschneckenmaschine, z.B. dem Hauptextruder zugeführt werden.

Die zu dieser Ausgestaltung notwendigen Konfigurationen der Schneckenwellen, also insbesondere ihre Schneckenwellensteigungen, ihre Ausgestaltung teilweise als Knet-Scheiben, Knetblöcke etc., sind im Stand der Technik hinreichend bekannt und werden aus diesem Grunde nicht näher beschrieben.

Selbstredend weist die erfindungsgemäße Schneckenmaschine einen Elektromotor auf, der mit einem Getriebe verbunden ist. An das Getriebe ist die vorerwähnte bzw. sind die vorerwähnten Schneckenwellen in bekannter Weise angekoppelt.

Neben dem bereits angesprochenen Entgasungsgehäuse und dem angesprochenen Einzugsgehäuse umfasst das Gehäuse der Schneckenmaschine vorteilhafterweise auch ein Anschlussgehäuse, das die Verbindung zu der weiteren Schneckenmaschine, also z.B. zu dem Hauptextruder, herstellt.

Das Entgasungsgehäuse ist in Prozessrichtung gesehen stromabwärts des Einzugsgehäuses angeordnet.

Das Einzugsgehäuse weist eine geeignete Öffnung auf, die in Wirkverbindung mit einer Zuführeinrichtung steht, über die das Schüttgut dem Einzugsgehäuse zugeführt wird. Die Zuführeinrichtung kann insbesondere als Zuführtrichter ausgestaltet sein. Der Zuführeinrichtung kann auch eine, eine geeignete Ausgestaltung aufweisende, Dosier-Einrichtung vorgeschaltet sein.

In die Zuführeinrichtung wird das Schüttgut in gewünschtem Umfang eingefüllt und über die Öffnung des Einzugsgehäuses den vorerwähnten Schneckenwellen zugeführt.

Das Füllmaß des einzuführenden Schüttguts hängt von den jeweiligen Prozessparametern ab, d.h. die Zuführeinrichtung kann entweder vollständig oder nur teilweise gefüllt sein, wobei dies ein permanenter Zufuhrfluss in das Einzugsgehäuse sein kann, solange der Gesamtprozess des Verfahrens läuft.

Stromabwärts zu dem Einzugsgehäuse und zu der Zuführeinrichtung ist das erfindungsgemäße Entgasungsgehäuse angeordnet, in dem zwei voneinander getrennte, nachfolgend noch näher beschriebene, Bereiche entstehen, in denen Vakuum oder ein druckbeaufschlagtes Fluid, z.B. Druckluft, entsteht bzw. eingeleitet wird. Diese Bereiche werden deshalb allgemein als Druckbereiche und im Besonderen als Überdruckbereiche bezeichnet.

Dabei soll zunächst das Entgasungsgehäuse beschrieben werden, soweit es als Vakuum-Gehäuse-Abschnitt im Sinne des Gehäuses der Schneckenmaschine fungiert.

Das Vakuum-Gehäuse-Abschnitt weist an geeigneter Stelle, die prinzipiell beliebig angeordnet sein kann, einen oder mehrere Vakuumanschlüsse auf. Über diesen einen oder diese mehreren Vakuumanschlüsse wird die durch das Schüttgut mit-eingeschleppte Luft abgesaugt. Die Absaugung wird nachfolgend auch als Entgasung oder Entlüftung bezeichnet. Dieser Vorgang des Absaugens ist jedoch nicht auf Luft beschränkt, sondern kann jedes Fluid umfassen. Der Einfachheit halber wird aber nachfolgend von Luft gesprochen.

Durch das Absaugen von Luft wird die Transportfähigkeit bzw. Weiterverarbeitungsfähigkeit des Schüttguts wesentlich verbessert.

Das Vakuum wird im Inneren des Entgasungsgehäuses, in dem ein Teilabschnitt der Schneckenwellen verläuft, zur Verfügung gestellt.

Unabhängig von den zur Beschreibung eines Vakuums verwendeten Maßeinheiten, z.B. Pa, bar, wird im Sinne der vorliegenden Erfindung unter Vakuum ein Zustand in einem Raum verstanden, bei dem der Luftdruck in diesem Raum unter dem der Atmosphäre liegt. Vakuum im Sinne der vorliegenden Erfindung kann ein Grobvakuum, Feinvakuum, Hochvakuum oder Ultrahochvakuum sein.

Der Vakuum-Gehäuse-Abschnitt des Entgasungsgehäuses kann mit dessen inneren, die wenigstens eine Gehäusebohrung teilweise begrenzenden Wandabschnitt über Kanäle oder sonstige geeignete konstruktive Weise mit den Vakuumanschlüssen verbunden sein.

Die Positionierung des Entgasungsgehäuses und mithin die Absaugung erfolgen in Förderrichtung der SideFeeder-Schneckenwellen zwischen der Zuführeirichtung für das Schüttgut und der Hauptschneckenmaschine. Mithin handelt es sich um eine VorwärtsEntlüftung und nicht um eine Rückwärts-Entlüftung.

Zum Zwecke des Absaugens der durch das Schüttgut mit-eingeschleppten Luft über den wenigstens einen Vakuumanschluss ist zwischen dem inneren, die wenigstens eine Gehäusebohrung teilweise begrenzenden Wandabschnitt des Entgasungsgehäuses und der bzw. den in dieser wenigstens einen Gehäusebohrung verlaufenden Schneckenwelle(n) wenigstens ein Filterelement angeordnet, das nachfolgend beschrieben wird. Dieses Filterelement dient dazu, den Absaugeffekt auf die abzusaugende Luft bzw. das Fluid zu beschränken und das Schüttgut im Übrigen nicht zu beeinflussen.

Dieses wenigstens eine Filterelement ist zwischen dem inneren Wandabschnitt des Entgasungsgehäuses und der oder den Schneckenwellen angeordnet. Es ist so ausgestaltet, dass ein Teil des Schüttgutes durch Anlegen des Vakuums zwar mit angesaugt werden kann, aber durch das Filterelement weitestgehend zurückgehalten, also nicht mit abgesaugt wird, so dass es dem Weitertransport bzw. der Weiterverarbeitung durch die Schneckenwelle(n) weiter zur Verfügung steht.

Vorzugsweise ist mindestens ein Vakuumanschluss pro Filterelement vorgesehen. Die Positionierung des wenigstens einen Filterelements entspricht der Positionierung der konstruktiven Bauteile, über die die Absaugung der durch das Schüttgut mit-eingeschleppten Luft erfolgt.

Das Entgasungsgehäuse und der Filter, der in dem Entgasungsgehäuse angeordnet ist, sind mithin an derselben Stelle platziert, d.h. in Prozessrichtung stromabwärts nach der Zuführeinrichtung in der Einzugszone.

Je nachdem, ob eine oder mehrere Gehäusebohrungen vorgesehen sind, kann die Form des wenigstens einen Filterelements teilkreis-förmig sein, wobei etwa bei einem zweiwelligen Seitenextruder eine flügelförmige Konfiguration des Filterelements entstehen kann, weil dieses dann zwei Schneckenwellen übergreift. Es kann ferner eine andere Form als eine teilkreisförmige gewählt werden.

Gegenüber der Gehäuseinnenwand der Schneckenmaschine kann das wenigstens eine Filterelement um einen Spalt zurückversetzt sein. Der Spalt kann eine beliebige Breite aufweisen. Ob ein größerer oder kleinerer, insbesondere minimaler Spalt gewählt wird, hängt unter anderem von den Verfahrensparametern ab. Das Filterelement kann aber auch bündig mit der inneren Oberfläche des Gehäuses sein. Wird das Filterelement um einen definierten Spalt zurückversetzt, so kann die Bildung eines sogenannten Filterkuchens ermöglicht werden.

Ist infolgedessen die Innenwand des Entgasungsgehäuses teilkreisringförmig ausgestaltet, so bedeutet die Bildung eines Spaltes, dass auch das Filterelement mit einem Teil-Kreisring-Querschnitt zurückversetzt ist, wobei der Spalt vorzugsweise einen gleichbleibenden Abstand oder einen unterschiedlich verlaufenden Abstand aufweisen kann. Der Spaltabstand beträgt dabei vorzugsweise mindestens 0,90 mm bis 1,60 mm, noch weiter vorzugsweise zwischen 1,6 mm und 1,7 mm und noch weiter vorzugsweise 1,70 mm bis 2,0 mm. Er kann jedoch, wie dargelegt, auch andere Maße annehmen, insbesondere als größerer Spalt ausgestaltet sein.

Wie dargelegt, muss der Spalt keine gleichbleibende Dicke aufweisen und kann daher einem Teil-Kreisring-Querschnitt lediglich ähneln. Auch insoweit ist der Fachmann aber nicht gebunden. So kann er sich z.B. davon leiten lassen, bei einer vergleichsweise geringen Dicke des Spaltes diese Dicke annähernd konstant oder konstant zu halten. Bei einer größeren Spaltbreite mag er möglicherweise die Gleichmäßigkeit der Spaltbreite etwas weniger bedeutend ansehen. Bei den vorerwähnten Maßangaben zu den Spaltbreiten wird er eher versuchen, die Spaltbreite gleich zu halten.

Das Filterelement ist als Inliner ausgestaltet, der die wenigstens eine oder die beiden oder mehreren SideFeeder-Schneckenwellen über den gesamten Umfang umfasst. Dieser Filter-Inliner wird mithin in der Gehäusebohrung, die das Entgasungsgehäuse durchläuft, platziert. Er befindet sich damit in dem Zwischenraum zwischen der oder den SideFeeder-Schneckenwellen und dem inneren Wandabschnitt des Entgasungsgehäuses.

Besonders bevorzugt ist es, wenn der Filter-Inliner in der Bohrung des Entgasungsgehäuses auswechselbar gehalten ist.

Beispielsweise über Kanäle, Bohrungen oder entsprechend ausgestaltete Perforationen innerhalb der Wandung des Entgasungsgehäuses wird das Vakuum in Umfangsrichtung sowie in Axialrichtung angelegt - und/oder es wird Druckluft, wie weiter unter noch dargestellt werden wird - auf die Außenseite des Filter-Inliners geleitet.

Der Filter-Inliner kann also beispielsweise bei einem zweiwelligen SideFeeder in Frontsicht der Form einer liegenden Acht ähneln.

Ein an der Innenwandung der im Entgasungsgehäuse verlaufenden Gehäusebohrung angebrachter Steg begrenzt die Weiterleitung des Unterdrucks in Umfangsrichtung, sodass zwei voneinander getrennte Bereiche entstehen. Über je einen Kanal, eine Bohrung oder Perforationen von oben oder unten wird Vakuum - oder Druckluft - an das Gehäuse angeschlossen.

Der mindestens eine, jeweils die Innenwandung der wenigstens einen Gehäusebohrung begrenzende, Steg kann dabei etwa in der 3 Uhr-Stellung und 9 Uhr-Stellung der Innenwandung der Gehäusebohrung angeordnet sein und verläuft durchgängig an dieser Wandung in einem definierten Bereich des Entgasungsgehäuses.

Ist also beispielsweise je ein Vakuumanschluss an der Oberseite und Unterseite des Entgasungsgehäuses vorgesehen, so kann über je einen Kanal, eine Bohrung oder Perforation von oben bzw. von unten Vakuum oder Druckluft an das Gehäuse angeschlossen werden.

Zu diesem Zweck ist das Filterelement, insbesondere der Filter-Inliner so an dem wenigstens einen Steg angeordnet, dass beispielsweise eine Nut-Feder-Anordnung zwischen dem Filterelement, insbesondere dem Filter-Inliner und dem Steg entsteht oder dass der Filter-Inliner in sonstiger Weise in einem dichtenden, unmittelbaren oder mittelbaren, Kontakt mit dem Steg steht. Es entsteht aufgrund des durchgängigen, d.h. nicht durchbrochenen Verlaufs des Stegs an der Innenwandung der Gehäusebohrung und der verbindenden Anordnung mit dem Filterelement, insbesondere dem Filter-Inliner im Zusammenwirken mit eben dieser Innenwandung und der Außenfläche des Filterelements bzw. des Filter-Inliners eine abdichtende Anordnung, die die Druckbereiche räumlich und funktional gegeneinander abgrenzt. Der Filter-Inliner ist dabei vorzugsweise so ausgestaltet, dass er eine nutförmige, axial entlang dem seitlichen Trennsteg verlaufende Vertiefung aufweist. Auf diese Weise kann das Filterelement, insbesondere der Filter-Inliner als gesamtes Bauteil auf einfache Weise bei Bedarf aus dem Entgasungsgehäuse herausgezogen werden und wieder in dieses eingesetzt, z.B. eingeschoben, werden.

Selbstverständlich ist es in Bezug auf die gegenseitige Anordnung des Trennstegs, des Filter-Inliners und der Vakuumanschlüsse auch möglich, inverse Formgestaltungen vorzusehen.

Die Gesamtanordnung kann mithin derart gestaltet werden, dass ein einzelner Vakuumbereich bzw. Überdruckbereich realisiert wird. Es können aber auch zwei oder mehrere Druckbereiche definiert werden.

Besonders vorteilhaft ist es, wenn nicht nur jeder vorbeschriebene Druckbereich nicht nur mit Vakuum beaufschlagt wird, sondern wenn jedes Filterelement bzw. die jeweilige Filterseite eines Filter-Inliners auch mit einem Fluid, z.B. Druckluft, beaufschlagt werden kann, um den Filter entgegen der Saugrichtung rückzuspülen.

Dabei kann jedem Unterdruckbereich ein oder mehrere Druckluft-Rückspülanschlüsse zugeordnet sein. Eine solche mehrfache Unterteilung erscheint insbesondere bei einer Ringextruder-Ausgestaltung sinnvoll aufgrund des großen inneren Gehäuseumfangs.

Konstruktiv ist es möglich, über jeweils eine weitere in dem Entgasungsgehäuse vorgesehene Bohrung, beispielsweise von oben und unten, Druckluft zum Rückspülen einzuspeisen.

Selbstverständlich sich auch insoweit andere konstruktive Möglichkeiten denkbar. So kann es zur weiteren Vereinfachung der Konstruktion des Entgasungsgehäuses vorgesehen sein, dass das Rückspülen des Filters auch über die Vakuumanschlüsse selbst erfolgt. Hierdurch können zusätzliche Anschlussbohrungen im Gehäuse entfallen. Zum Rückspülen wird dann beispielsweise ein in der jeweiligen Vakuumleitung befindliches Ventil geschlossen. Übliche Ventile, z.B. Kugelhähne, Magnetventile oder Absperrschieber, können hierzu vorgesehen sein und manuell, elektromagnetisch oder motorbetrieben betätigt sowie durch eine automatische Steuerung angesteuert werden. Über einen zusätzlichen Anschluss in der Vakuumleitung zwischen dem Gehäuse und dem Absperrventil kann dann anschließend die Druckluft aktiviert werden.

Durch das Vorsehen wenigstens eines räumlichen Bereiches zwischen der Innenwandung des Entgasungsgehäuses und dem (bevorzugten) Filter-Inliner kann also nach der Erfindung auf einfache Weise ein Vakuum hergestellt werden, mit Hilfe dessen das durch das Schüttgut mit-eingeschleppte Fluid, z.B. Luft, abgesaugt wird. Ebenso ermöglicht diese Ausgestaltung ein Spülen des Filters. Die Betriebsweise kann dabei so erfolgen, dass bei wenigstens zwei vorgesehenen Druckbereichen einer von diesen mit Vakuum beaufschlagt wird, während der andere Bereich rückgespült wird bzw. umgekehrt. Selbstverständlich ist es auch möglich, jeden der beiden (oder die mehreren) Druckbereiche über nur eine Bohrung wechselweise mit Vakuum oder aber mit Druckluft zu beaufschlagen.

In Abhängigkeit von dem gewählten Filtermaterial und dessen Dicke können in dem Entgasungsgehäuse weiterhin Stützstege integriert werden, die den Vakuumbereich nicht abtrennen, vielmehr die mechanische Stabilität des Filters verbessern.

Solche zusätzlichen Stützstege können beispielsweise an der Innenwandung der Gehäusebohrung in dem Bereich des Entgasungsgehäuses in der 6-Uhr- und 12-Uhr-Stellung angeordnet sein. In einem solchen Fall würden sich also bei zwei seitlichen Trennstegen insgesamt vier Stege an der Innenwandung der Gehäusebohrung befinden, die das Filterelement, bevorzugt den Filter-Inliner, einerseits mehrdimensional abstützen und andererseits wenigstens zwei gegeneinander abgegrenzte Druckbereiche schaffen.

Auch insoweit sind natürlich inverse Konstruktionsmöglichkeiten gegeben.

Im Gegensatz zu den beiden seitlichen Trennstegen, die die Druckbereiche gegeneinander abdichten, sind die beispielsweise oben und unten angeordneten und ebenfalls in Längsrichtung verlaufenden Stützstege mit Durchbrechungen versehen. Diese Durchbrechungen können in Kanäle, Bohrungen der Vakuumanschlüsse münden. Durch die Durchbrechungen können sich das Vakuum bzw. die Druckluft jeweils seitlich bis zu den Trennstegen ausbreiten. Infolge der Durchbrechungen bewirken die zusätzlichen Stützstege also keine zusätzliche Anzahl von Druckbereichen.

Zur Montage und Demontage des Filter-Inliners oder des Filterelements, der bzw. das mehrteilig oder einteilig aufgebaut sein kann, kann das Entgasungsgehäuse dreiteilig aufgebaut sein, also einen die Vakuumanschlüsse und etwaige weitere Wasseranschlüsse aufnehmenden Mittelteil aufweisen, an dem sich an seinem vorderen und hinteren Ende ein vorderes Gehäuseendstück und ein hinteres Gehäuseendstück befinden. Das Auswechseln des Filters erfolgt dabei über eine Demontage des SideFeeders.

Es ist aber weiter möglich, die Konstruktion noch derart zu vereinfachen, dass das Entgasungsgehäuse nur noch einteilig ausgestaltet ist. Durch geeignete Anschlussmechanismen zur Verbindung mit dem Einzugsgehäuse und dem Anschlussgehäuse kann das Entgasungsgehäuse dann auf einfache Weise bei Bedarf aus der Schneckenmaschine herausgenommen werden. Der Filter-Inliner oder das Filterelement ist hierdurch gut zugänglich und kann auf einfache Weise gegen einen anderen Filter-Inliner bzw. ein anderes Filterelement ausgetauscht werden.

Ein wesentlicher Vorteil der vorbeschriebenen Konstruktion gegenüber dem Stand der Technik ist darin zu sehen, dass, bezogen auf die Baulänge, d.h. die Länge des SideFeeder-Gehäuses bzw. der Haupt-Schneckenmaschine, eine wesentlich vergrößerte Filterfläche realisiert werden kann. Durch das Schaffen von zwei oder mehr Druckbereichen, etwa in Form eines oberen Druckbereichs und eines unteren Druckbereichs, kann insbesondere bei entsprechender Positionierung der Vakuumanschlüsse ein besonders effektives Entgasungsverfahren zur Verfügung gestellt werden.

Die Filterfläche kann auf diese Weise nahezu beliebig vergrößert werden, indem man z.B. das Filterelement bzw. den Filter-Inliner einfach verlängert. Dabei ist es prinzipiell sogar möglich, die Verlängerung so auszugestalten, dass das Filterelement bzw. der Filter-Inliner in Längsrichtung über die Stirnseite(n) des Entgasungsgehäuses vorsteht und in das Einzugsgehäuse oder das Anschlussgehäuse hineinragt.

Die im Vergleich zur Baulänge vergrößert realisierbare Filterfläche macht es zudem möglich, die Anzahl der verschiedenen Filtertypen je nach zu verarbeitendem Schüttgut zu reduzieren, sodass sich die Gesamtkosten des Systems insgesamt verringern lassen. Dadurch entstehen auch geringere Vorhaltungskosten und Lagerkosten für die betreffenden Filter.

Aus dem Vorstehenden folgt ferner, dass die Erfindung nicht nur für Schneckenmaschinen des SideFeeder-Typus geeignet ist, sondern auch für sonstige Schneckenmaschinen einsetzbar ist, also etwa für Hauptextruder, gleichgültig, ob es sich hierbei um Einschneckenwellenextruder, Doppelschneckenwellenextruder, Mehrschneckenwellenextruder oder Ringextruder handelt.

In einer weiter bevorzugten Ausgestaltung der Erfindung kann das Entgasungsgehäuse, in dem der Filter-Inliner eingebaut wird, mit Luft oder mit einer Flüssigkeit, vorzugsweise Wasser, gekühlt werden. Hierzu ist wenigstens ein Wasseranschluss für die Gehäusekühlung vorgesehen.

Es ist aber gleichermaßen möglich, in den Filter-Inliner direkt Kühlbohrungen zu integrieren, sodass der Filter selbst gekühlt wird. Dabei können die Kühlbohrungen durch eine Art Beschichtung abgedichtet werden.

Alternativ können bei der Fertigung des Inliners im ersten Schritt die Kühlbohrungen angefertigt werden. Anschließend wird das Filtermaterial beschichtet, sodass die Filterporen innerhalb der Kühlbohrungen verschlossen werden. Danach wird die Außen- und Innenkontur des Inliners bearbeitet. Bei diesem Schritt wird die Beschichtung abgetragen, sodass die Poren an der Oberfläche wieder geöffnet werden. Auf diese Weise wird die Durchlässigkeit des Filters hergestellt und man erhält gleichzeitig abgedichtete Kühlbohrungen.

Bei der Wahl der Filterfeinheit ist der Fachmann frei, diese je nach zu verarbeitendem Schüttgut und Dauer der Verarbeitungsprozesse frei zu bestimmen. Im Allgemeinen haben sich für die Filterfeinheit Porendurchmesser im Bereich von etwa 5 µ bis etwa 100 µ als geeignet erwiesen.

Auch in der Wahl des Filtermaterials ist der Fachmann prinzipiell nicht beschränkt.

Bevorzugt wird jedoch Filtermaterial aus oder mit porösem Metall verwendet und das einem kompakten Festkörper ähnelt. Weiter ist es bevorzugt, das Filtermaterial aus porösem Metall nicht in einem Sinterprozess herzustellen. Freilich würde auch ein Filtermaterial aus porösem Metall möglich sein, das in einem Sinterprozess hergestellt ist.

Geeignet sind weiterhin Materialien wie Vliese, Gewebe, Gewirke, Granulat aus den unterschiedlichen Materialien, insbesondere solchen, wie sie nachfolgend näher beschrieben werden.

Geeignet als Material für den Filter ist ein mit einem Bindemittel bearbeitetes Metallpulver oder Aluminiumpulver, das je nach Porengröße eine sehr feine bis gute Oberflächenstruktur aufweist. Durch mechanisches Bearbeiten, z.B. Polieren, kann die Oberfläche in gewünschtem Maße gestaltet werden.

Weiter geeignet als Material ist Stahl- oder Chromstahlpulver, das mit einem Bindemittel bearbeitet wurde und die vorerwähnten Eigenschaften hat.

Ferner geeignet als Material ist ein Produkt aus Mineralpartikeln, das mit einem Bindemittel bearbeitet wurde.

Zudem kommt ein metallgefüllter, poröser Gießharz-Formkörper als Filtermaterial in Frage.

Die Gesamtporosität des Filterelements bzw. Filter-Inliners richtet sich nach den jeweiligen Verfahrensparametern, wie z.B. nach dem zu verarbeitenden Schüttgut. Sie steht damit im Belieben des Fachmanns. Sie kann beispielsweise den Wert von 20% überschreiten.

Auch hinsichtlich der Dichte, der Härte oder der Dauertemperaturbeständigkeit des Materials ist der Fachmann im Rahmen der vorliegenden Erfindung nicht gebunden und in der Auswahl geeigneter Parameter frei.

Besonders bevorzugt ist es, ein Filtermaterial zu wählen, das durch additive Fertigung, Laser-Sintern bzw. industriellem 3D-Druck aus Keramik, Metall, Kunststoff, Aluminium etc. hergestellt wird.

Additive Fertigung bezeichnet dabei ein Verfahren, bei dem auf der Basis von digitalen 3D-Konstruktionsdaten durch das Ablagern von Material schichtweise ein Bauteil aufgebaut wird. Durch die additive Fertigung wird eine besonders miniaturisierte Porosität des Filters erzielbar. Ein auf diese Weise im Mikro-Bereich hergestelltes Produkt hält hohen Dauerbelastungen stand. Ein weiterer Vorteil der additiven Fertigung ist, dass man, falls gewünscht, auch komplexe Geometrien in den Filter einarbeiten kann, z.B. Kühlbohrungen, Verteilerkanäle für Vakuum sowie Druckluft, Nuten für Dichtungen, Befestigungsgewinde und dergleichen.

Darüber hinaus kann im Wege der additiven Fertigung insbesondere die Porengröße des Filters beeinflusst werden. Besonders vorteilhaft ist es dabei, den infolge der Beaufschlagung des Vakuums oder des positiven Drucks nie vollends auszuschließenden Druckverlust über den Filter zu minimieren, indem man auf der Innenseite des Filters sehr kleine Poren herstellt und diese dann nach außen immer größer werden. Inverse Konfigurationen sind ebenfalls möglich.

Wie im Stand der Technik bereits vorgesehen, z.B. in der DE 10 2013 208 993 B4, ist es möglich, das wenigstens eine Filterelement bzw. den Filter-Inliner mit einem Schutzelement zu versehen, ohne dass dabei freilich eine Unterteilung in mehrere Schutzbereiche vorgenommen werden müsste.

Die Vorteile der vorbeschriebenen Erfindung sind vielfältig:
So besteht die Möglichkeit, die Technologie zur Absaugung, Filtration bzw. Druckbeaufschlagung auch direkt bei einer Haupt-Schneckenmaschine einzusetzen.

Der vorbeschriebene Filter-Inliner kann auch bei einem sog. Stuffer angewendet werden, der nicht zur Materialzufuhr, sondern für die Entgasung eingesetzt wird. Dabei kann es in manchen Prozessen vorkommen, dass im Bereich der Entgasung Material austritt. Dies kann durch den zusätzlichen Filter verhindert werden.

Wie bereits angesprochen, ist eine sehr große Filterfläche realisierbar. Dies ist besonders vorteilhaft bei der Verarbeitung von Pulvern mit sehr geringer Partikelgröße, da hierfür eine hohe Filterfeinheit benötigt wird. Je geringer die Porengröße des Filters ist, desto stärker muss der angelegte Unterdruck sein. Dem kann durch eine große Filterfläche entgegengewirkt werden. Einfluss auf die Filterfläche ist dadurch gegeben, dass die Länge des Inliners vergrößert wird.

Aus dem Vorstehenden folgt weiterhin der recht einfache Aufbau, da nur noch wenige Bauteile benötigt werden. Eine komplizierte Halterung des Filters ist nicht notwendig. Daraus resultiert eine insgesamt kostengünstige Fertigung.

Die Konstruktion ist darüber hinaus robust.

Wie dargelegt, ermöglicht die Erfindung die Entlüftung, d.h. Entgasung. Sie ist aber nicht hierauf beschränkt, sondern für Fluide im Allgemeinen geeignet.

Ein solches Fluid kann z.B. Wasserdampf sein. Ein solcher kann z.B. entstehen, wenn infolge des Transports oder der Weiterverarbeitung des Schüttguts hohe Temperaturen entstehen. Enthält das Schüttgut Feuchtigkeit, kann dadurch Wasserdampf entstehen, der mit der Technik der Erfindung in gleicher Weise wie vorbeschrieben abgesaugt werden kann.

Die mechanische Stabilität eröffnet dabei zusätzliche Anwendungen in Form eines mechanischen Abpressens von Flüssigkeiten, insbesondere Wasser. Dabei wird das aufzubereitende Material, vorzugsweise Kautschuk, in den Schneckenwellen durch eine rückfördernde Anordnung in der Schneckenwellenkonfiguration oder durch den Fließwiderstand einer Extrusionsdüse (Düsenrückdruck) komprimiert. Dadurch tritt die Flüssigkeit aus dem Material und wird dann über den Filter abgelassen oder kann abgesaugt werden; ein mechanisches Abpressen von Flüssigkeiten ist beispielsweise in der EP 1 400 337 B1 beschrieben.

Ein weiterer Vorteil der Erfindung ist die große Flexibilität der Konstruktion. Auf einfache Weise kann der Einsatz unterschiedlichster Filtermaterialen realisiert werden. Auf diese Art und Weise kann auch die Art der Filtration gewählt werden, z.B. als sogenannte Oberflächenfiltration oder als Tiefenfiltration.

Zudem kann die Dicke des Filters leicht an den jeweiligen Verarbeitungsprozess für das Schüttgut angepasst werden, wodurch man die Möglichkeit erhält, den notwendigen Unterdruck zu reduzieren. So ist davon auszugehen, dass ein Filter mit hoher Filterfeinheit weniger durchlässig ist und somit ein großer Unterdruck benötigt wird. Eine entsprechend geringe Filterwandstärke wirkt diesem Problem entgegen.

Der Betrieb der Schneckenanlage lässt sich wie folgt zusammenfassen:
Mittels einer ggf. der Zuführeinrichtung vorgelagerten Dosierungseinrichtung, z.B. einer gravimetrischen Dosiereinrichtung, wird der Schneckenmaschine über die Zuführeinrichtung das Schüttgut zugeführt. Das Schüttgut kann pulverförmig, puderförmig, staubförmig, granulatförmig sein oder sich in sonstigen geeigneten Zustand befinden. So kann beispielsweise Polymergranulat, Kautschuk-Granulat bearbeitet werden ebenso wie pulverförmige Füllstoffe oder Additive. Um das Einzugsverhalten der Schneckenmaschine zu verbessern, wird das Schüttgut mittels der Entgasungsvorrichtung des Entgasungsgehäuses entgast. Hierzu wird über Anschlüsse für Vakuum ein Vakuum erzeugt, das in einem abgedichteten Bereich zwischen der Innenwandung des Entgasungsgehäuses und dem Filterelement bzw. dem Filter-Inliner, d.h. in dem Druckbereich, durch Absaugung von Luft und/oder Gas aus dem Schüttgut entsteht.

Das pulverförmige, puderförmige, granulatförmige oder sonstige Schüttgut wird durch das Filterelement bzw. Filter-Inliner zurückgehalten, sodass das eigentliche Schüttgut über die sich drehenden Schneckenwellen weitergefördert und in eine eventuell vorhandene Aufschmelzzone bzw. Druckaufbauzone überführt und dort bearbeitet und dann beispielsweise mittels einer Austrittsdüse ausgetragen wird, und zwar in die eigentliche Haupt-Schneckenmaschine.

Die Feinheit des Filters ist dabei so gewählt, dass zwar Fluid, z.B. Luft und/oder Gas, aus dem Schüttgut abgesaugt werden kann, das eigentliche Schüttgut aber durch die entsprechende Konfiguration der Filteröffnungen nicht durch diesen hindurchtreten kann, sodass es der vorbeschriebenen Weiterförderung und Weiterverarbeitung zugänglich ist.

Der Betrieb der Schneckenanlage ist aber nicht auf die Schaffung eines Vakuums beschränkt, sondern es kann in die vorbeschriebenen Druckbereiche auch Druckluftzurückspülung des Filters, d.h. zur Reinigung des Filters, zugeführt werden.

Über Kanäle oder Bohrungen innerhalb des Gehäuses wird das Vakuum oder die Druckluft in Umfangsrichtung sowie in Axialrichtung auf die Außenseite des Filterelements bzw. Filter-Inliners geleitet.

Dadurch, dass seitlich begrenzend jeweils ein Steg an der Innenseite der Wandung des Entgasungsgehäuses angeordnet ist, wird die Weiterleitung des Unterdrucks bzw. der Druckluft in Umfangsrichtung begrenzt, sodass zwei voneinander getrennte Bereiche entstehen. Das Vakuum oder die Druckluft wird dabei bevorzugt über eine Bohrung in das Entgasungsgehäuse eingeleitet.

Die Betriebsweise kann dabei so erfolgen, dass die Unterdruckbereiche bzw. Druckbereiche abwechselnd mit Vakuum beaufschlagt werden und der jeweils andere Bereich rückgespült werden kann. Es ist aber auch möglich, jeden der beiden Unterdruckbereiche oder Druckbereiche mit nur einer Bohrung wechselweise mit Vakuum oder mit Druckluft zu betreiben.

Das System kann derart gestaltet werden, dass ein einzelner Vakuumbereich realisiert wird. Alternativ können zwei oder mehrere Unterdruckbereiche bzw. Druckbereiche definiert werden. Die Unterdruckbereiche bzw. Druckbereiche werden gesondert über die Vakuumanschlüsse mit einem Vakuum beaufschlagt. Druckluft kann insbesondere durch gesonderte Rückspülanschlüsse eingeführt werden oder es kann der Vakuumanschluss hierfür zu Nutze gemacht werden. Dazu kann über jeweils eine weitere Bohrung beispielsweise von oben bzw. von unten, Druckluft zum Rückspülen angeschlossen werden.

Jeder Druckbereich eines jeden Filterelements kann mit Druckluft beaufschlagt werden, um den Filter entgegen der Saugrichtung rückzuspülen.

Wird zur weiteren Vereinfachung des Entgasungsgehäuses das Rückspülen des Filters über die Vakuumanschlüsse vorgesehen, wird zum Rückspülen ein in der jeweiligen Vakuumleitung befindliches Ventil geschlossen. Über einen zusätzlichen Anschluss in die Vakuumleitung zwischen dem Gehäuse und dem Absperrventil wird anschließend die Druckluft aktiviert.

Die Erfindung wird weiterhin mittels zweier Ausführungsbeispiele näher beschrieben, auf die die Erfindung freilich nicht beschränkt ist. Dabei zeigen:
- Fig. 1:: einen SideFeeder mit Entgasungsgehäuse;
- Fig. 2:: ein Entgasungsgehäuse nach Fig. 1 mit Filter-Inliner;
- Fig. 3:: die Frontansicht des Entgasungsgehäuses mit Filter-Inliner;
- Fig. 4:: das Entgasungsgehäuse ohne Filter-Inliner;
- Fig. 5:: eine Variante des Entgasungsgehäuses ohne Stützstege zur Maximierung der Filterfläche;
- Fig. 6:: ein Entgasungsgehäuse eines Ringextruders mit Filter-Inliner sowie
- Fig. 7, 7a:: eine Seitenansicht (Fig. 7) zur Darstellung des Spalts, um den das Filterelement gegenüber der Gehäuseinnenwand zurückversetzt ist, zusammen mit einer Detaildarstellung (Fig. 7a).

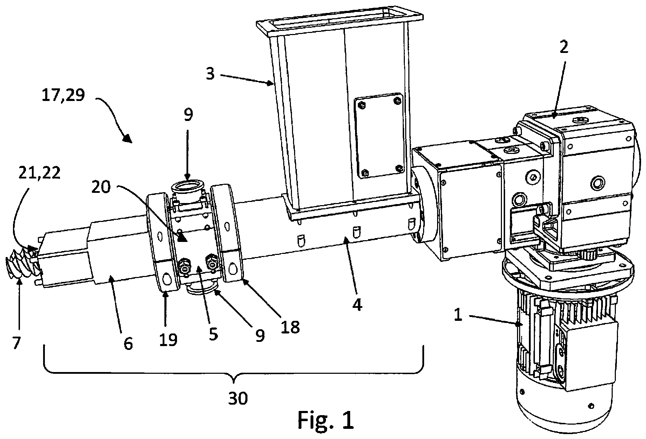

Fig. 1 zeigt einen SideFeeder 17, der über einen Motor 1 und ein Getriebe 2 wenigstens zwei Schneckenwellen 7 antreibt. In Prozessrichtung stromabwärts ist im Anschluss an das Getriebe das Einzugsgehäuse 4 angeordnet, das über die Zuführeinrichtung 3 das zu verarbeitende Material, nämlich das Schüttgut (nicht dargestellt), aufnimmt. Die Zuführeinrichtung 3 ist auf der Oberseite des Einzugsgehäuses angeordnet. Dazu ist das Einzugsgehäuse 4 mit einer - nicht dargestellten - Öffnung versehen.

Die Schneckenmaschine 29 in der Ausgestaltung des SideFeeders 17 weist dabei ein Gehäuse 30 auf, das neben dem erwähnten Einzugsgehäuse 4 auch das Entgasungsgehäuse 5 und das Anschlussgehäuse 6 umfasst; letzteres stellt die Verbindung zu der weiteren, nicht dargestellten, Haupt-Schneckenmaschine, insbesondere dem Hauptextruder, her.

Da der SideFeeder 17 in diesem Ausführungsbeispiel als zweiwellige Schneckenmaschine ausgestaltet ist, weist das Gehäuse durchgehend zwei Gehäusebohrungen 21, 22 auf, was in Fig. 1 angedeutet ist. Die Gehäuseschneckenwellenbohrungen 21 und 22 nehmen die Schneckenwellen 7 auf, die sich in diesen Gehäusebohrungen entweder gleichsinnig oder gegensinnig drehen.

Das Entgasungsgehäuse 5 kann einteilig oder mehrteilig aufgebaut sein. Es weist dabei einen Gehäusegrundkörper 20 auf, an den sich ein vorderes Gehäuseendstück 18 und ein hinteres Gehäuseendstück 19 anschließen. Zu sehen sind weiterhin an der Oberseite und Unterseite des Gehäusegrundkörpers 20 je ein Anschluss 9 für Vakuum, der nach den allgemeinen Erläuterungen auch gleichzeitig ein Anschluss für die Druckluft zum Rückspülen des Filterelements sein kann.

Das über die Zuführeinrichtung 3 in das Einzugsgehäuse 4 eingeführte Schüttgut wird über die Schneckenwellen 7 in Richtung Haupt-Schneckenmaschine gefördert. Es bleibt bei dem Vorgang der Förderung, wenn die Schneckenwellen lediglich als Förderschneckenwellen ausgestaltet sind. An den ersten Förder-Schneckenwellenabschnitt im Bereich des Einzugsgehäuses 4 kann sich aber - nicht dargestellt - ein Knet-Scheibenabschnitt und wiederum ein zweiter Förder-Schneckenwellenabschnitt anschließen, an den sich wiederum ein Abschnitt anschließen kann, der zu einem Druckaufbau vor dem Austrag des Schüttguts in die Haupt-Schneckenmaschine führt. Unterschiedliche Schneckenwellensteigungen bewirken entweder die reine Förderung des Schüttguts oder den Druckaufbau. Mittels des Knet-Scheibenabschnitts kann bereits eine Vorverarbeitung des Schüttguts vorgenommen werden, indem dort das Schüttgut je nach Konsistenz aufgeschmolzen und/oder homogenisiert wird. Ebenso kann im Falle der Verarbeitung von Kautschuk eine Mastizierung oder eine Vor-Mastizierung des Schüttguts erfolgen.

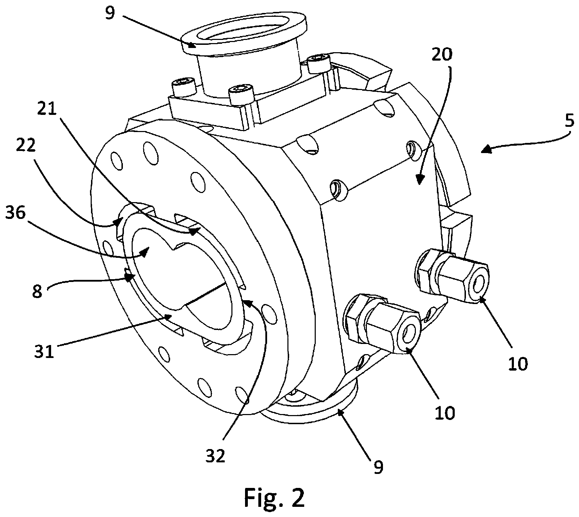

In Fig. 2 wird eine Detaildarstellung des Entgasungsgehäuses 5 nach Fig. 1 mit dem Filterelement 8 gezeigt, das als Filter-Inliner 31 in die Gehäusebohrungen 21 und 22 auswechselbar eingesetzt, z.B. eingeschoben, wird. Der Filter-Inliner 31 ist in seinem Innenbereich wie eine liegende Acht ausgestaltet und nimmt die (nicht gezeigten) beiden Schneckenwellen 7 auf. Die beiden oberhalb und unterhalb des Gehäusegrundkörpers 20 des Entgasungsgehäuses 5 angeordneten Anschlüsse 9 sind für die zur Verfügung Stellung von Vakuum bzw. Druckluft vorgesehen. Die beiden Wasseranschlüsse 10 erlauben die Kühlung des Gehäuses 5.

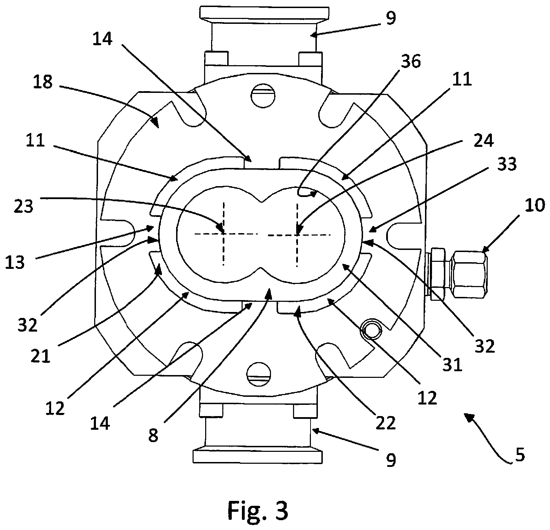

Die Fig. 3 zeigt die Fronansicht des Entgasungsgehäuses 5 mit Filterelement 8/Filter-Inliner 31. Die beiden Anschlüsse 9 für Vakuum bzw. Druckluft sind oben und unten in der 6 Uhr- bzw. 12 Uhr-Stellung des Entgasungsgehäuses 5 angeordnet. Etwa in der 4 Uhr-Stellung findet sich der Wasseranschluss 10 für die Gehäusekühlung.

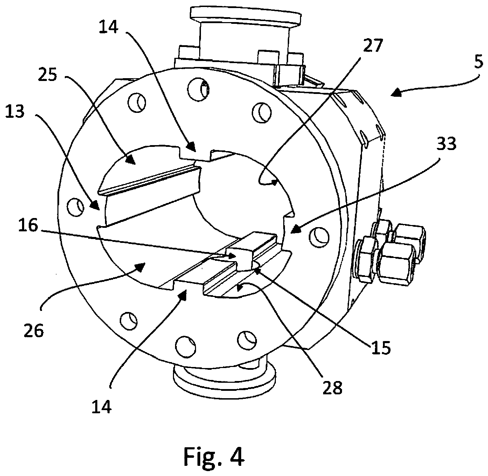

Die Gestaltung des Gehäuses 5 ist in der Frontsicht des vorderen Gehäuseendstücks 18 gezeigt. Die nicht gezeigten beiden Schneckenwellen 7 mit ihren Drehachsen 23, 24 werden von dem als Filter-Inliner 31 ausgestalteten Filterelement 8 umgeben. Die Schneckenwellen sowie der Filter-Inliner 31 sind in den Gehäusebohrungen 21, 22 der Schneckenmaschine aufgenommen. Das Entgasungsgehäuse 5 bildet dabei innere Wandabschnitte 25, 26, 27 und 28 aus, die in Fig. 4 dargestellt sind. Diese inneren Wandabschnitte werden, wie in Fig. 3 und Fig. 4 gezeigt, seitlich begrenzt durch zwei Stege 13, 33 die in diesen Ausführungsbeispielen in der 3 Uhr- und 9 Uhr-Stellung der Gehäusebohrungen 21 und 22 angeordnet sind. Da die Stege 13, 33, wie in Fig. 4 gezeigt, im Wesentlichen über die Länge der inneren Wandabschnitte 25 - 28 des Entgasungsgehäuses 5 ununterbrochen verlaufen, und da der Filter-Inliner 31 in die Gehäusebohrungen 21 und 22 derart eingesetzt ist, dass er in einem berührenden Kontakt mit den seitlichen Stegen 13, 33 ist, werden ein oberer Druckbereich 11 und ein unterer Druckbereich 12 gebildet, die voneinander durch die seitlichen Stege 13, 33 getrennt sind. Die Druckbereiche 11 und 12 fungieren als Unterdruckbereiche, wenn sie mit Vakuum beaufschlagt sind, und als Überdruckbereiche, wenn sie mittels Druckluft zum Rückspülen beaufschlagt sind. Der durch den Anschluss für das Vakuum bzw. die Druckluft entstehende Unterdruck bzw. Druck kann also infolge der Stege 13, 33 nicht von dem oberen Druckbereich 11 in den unteren Druckbereich 12 und umgekehrt weitergeleitet werden, sodass diese beiden Druckbereiche 11 und 12 voneinander getrennte, gegeneinander abgedichtete Bereiche sind. Über je eine Bohrung 15 von oben bzw. unten (obere Bohrung nicht gezeigt) wird über die oben und unten angeordneten Anschlüsse 9 für Vakuum bzw. Druckluft Vakuum oder Druckluft an das Entgasungsgehäuse 5 angeschlossen.

Die Betriebsweise erfolgt so, dass die beiden Unterdruckbereiche abwechselnd mit Vakuum beaufschlagt werden dergestalt, dass dann der jeweils andere Bereich rückgespült werden kann. In der vorliegenden Ausgestaltung erfolgt also der Betrieb so, dass Druckbereich 11 oder 12 ein Vakuumanschluss bzw. Druckluftanschluss zugeordnet ist. In der gezeigten Ausgestaltung sind der Vakuumanschluss und der Druckluftanschluss jeweils in dem Anschluss 9 enthalten. Es können aber auch - nicht dargestellt - gesonderte Druckluftanschlüsse vorgesehen sein, die sich anbieten können, falls dies je nach zu verarbeitendem Schüttgut notwendig ist. Über die beiden Vakuumanschlüsse 9 wird mithin die durch das Schüttgut mit-eingeschleppte Luft abgesaugt. Dadurch entsteht in den oberen und unteren Bereichen 11 und 12 ein Unterdruck. Gleichzeitig können diese Bereiche aber auch mit Druckluft beaufschlagt werden, um den in Filter-Inliner 31 entgegen der Saugrichtung rückzuspülen.

Der Filter-Inliner 31 ist auswechselbar gehalten. Die äußere Umfangsfläche des Filter-Inliners ist mit 32 gekennzeichnet. Die innere Oberfläche des Filter-Inliners ist mit 36 gekennzeichnet.

Über Bohrungen 15 und/oder nicht gezeigte Kanäle innerhalb des Gehäuses wird das Vakuum oder die Druckluft in Umfangsrichtung sowie in Axialrichtung auf die Außenseite des Filter-Inliners 31 geleitet.

Wie in Fig. 3 bzw. Fig. 4 zu sehen ist, sind - in Abhängigkeit vom gewählten Filtermaterial und dessen Dicke - im Gehäuse zusätzliche Stützstege 14 integriert. Diese weisen jedoch, wie in Fig. 4 zu sehen ist, jeweils eine Unterbrechung 16 zur seitlichen Weiterleitung von Vakuum bzw. Druckluft auf. Dies bedeutet, dass die Stützstege 14 im Gegensatz zu den beiden seitlichen Trennstegen 13, 33, die die Unterdruckbereiche gegeneinander abdichten, mit Durchbrechungen vorgesehen sind, die mit den Bohrungen der Vakuumanschlüsse fluchten können, sodass sich das Vakuum jeweils seitlich bis zu den Trennstegen 13, 33 ausbreiten kann. Die Durchgangsbohrung der Vakuumanschlüsse ist beispielhaft in Fig. 4 mit der Bezugsziffer 15 gekennzeichnet.

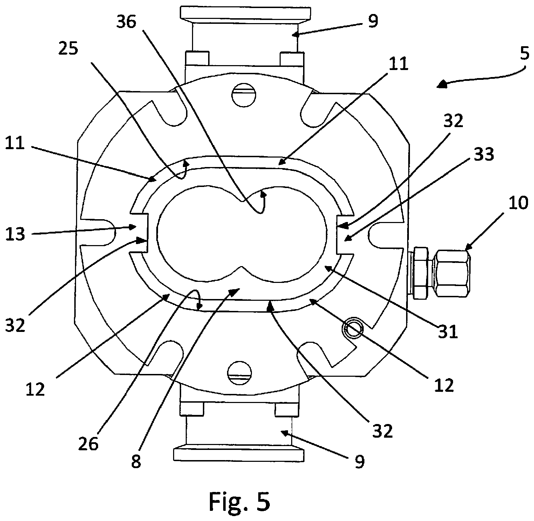

Fig. 5 zeigt die in Fig. 3, Fig. 4 dargestellte Ausgestaltung des in die Gehäusebohrungen 21, 22 eingesetzten Filter-Inliners 31. Dieser Filter-Inliner 31 umgreift dabei in dieser Ausgestaltung mittels seiner äußeren Umfangsfläche 32 die seitlichen Trennstege 13, 33, wodurch die abdichtende Trennung zwischen dem oberen Druckbereich 11 und dem unteren Druckbereich 12 bewerkstelligt wird. Dabei unterscheidet sich die Ausgestaltung gemäß Fig. 5 von den Ausgestaltungen gemäß Fig. 3, Fig. 4 dadurch, dass die Innenwandung des Entgasungsgehäuses 5 keine zusätzlichen Stützstege aufweist, sodass in dieser Ausgestaltung jeweils zwei voneinander abdichtend getrennte Druckbereiche 11 und 12 entstehen, die durch die äußere Umfangsfläche 32 des Filter-Inliners 31 und die inneren Wandungen 25 und 26 des Entgasungsgehäuses 5 sowie die seitlichen Stege 13 und 33 gebildet werden.

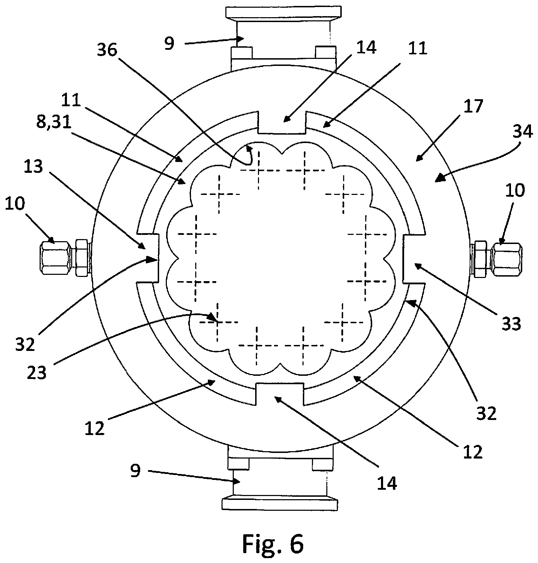

Das in Fig. 6 gezeigte Ausführungsbeispiel entspricht dabei prinzipiell dem in Fig. 3 und Fig. 4 gezeigten Ausführungsbeispiel mit dem Unterschied, dass wenigstens eine Gehäusebohrung 21 einen - im vorliegenden Beispielsfall - zwölfwelligen Ringextruder 34 aufnimmt, der seinerseits von einem als Filter-Inliner 31 ausgestalteten Filterelement 8 umgeben wird und u.a. aufgrund der seitlichen Stege 13, 33 jeweils einen oberen Unterdruckbereich 11 und einen unteren Unterdruckbereich 12 ausbildet. Die beiden seitlichen Trennstege 13, 33 dichten die Unterdruckbereiche 11 und 12 gegeneinander ab. Im Gegensatz dazu sind die ebenfalls vorgesehenen Stützstege 14 oben und unten durch Bohrungen der Vakuumanschlüsse durchbrochen (nicht gezeigt), sodass sich das Vakuum bzw. die Druckluft jeweils seitlich bis zu den Trennstegen 13, 33 in den Unterdruckbereichen 11 und 12 ausbreiten kann. Auch in diesem Ausführungsbeispiel ist das Filterelement 8 in der Ausgestaltung eines Filter-Inliners 31 auswechselbar in der Gehäusebohrung 21 gehalten und wird durch die seitlichen Stege 13, 33 und die Trennstege 14 fixiert.

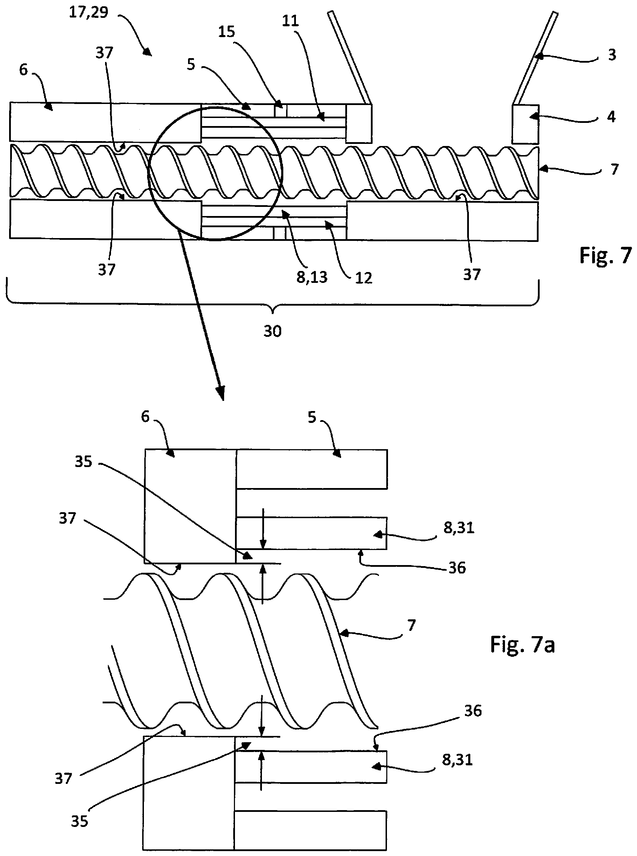

Fig. 7 und 7a zeigen die Ausgestaltung des Spalts 35, um den der Filter-Inliner 31 gegenüber der inneren Oberfläche 37 des Gehäuses 30 zurückversetzt ist. Dadurch entsteht ein etwas größerer Zwischenraum zwischen der Schneckenwelle 7 und der inneren Oberfläche des Filter-Inliners 36. Der vergrößerte Zwischenraum ermöglicht die Bildung des erwähnten "Filterkuchens".

In den gezeigten Ausführungsbeispielen wird die durch das Schüttgut mit-eingeschleppte Luft über einen oder mehrere Vakuumanschlüsse abgesaugt. Die vorgesehenen Filter verhindern, dass ein Teil des Schüttguts mitabgesaugt wird. Die Positionierung der Absaugung erfolgt in Förderrichtung der SideFeeder-Schneckenwellen zwischen der Zuführeinrichtung 3 für das Schüttgut und der Haupt-Schneckenmaschine. Es handelt sich insoweit um eine Vorwärtsentlüftung. Das Entgasungsgehäuse, in dem das Filterelement installiert ist, befindet sich in stromabwärts gerichteter Stelle, d.h. nach der Zuführeinrichtung 3 in der Einzugszone des Einzugsgehäuses 4. Die gezeigten Ausführungsbeispiele zeigen die Ausgestaltung, das Filterelement 8 als Filter-Inliner 31 zu gestalten, der die beiden SideFeeder-Schneckenwellen 7 über den gesamten Umfang umfasst, und der in dem Gehäuse 30 des SideFeeders platziert wird. Der Filter-Inliner 31 ist in der Gehäusebohrung 21, 22 auswechselbar gehalten. Über Bohrungen und/oder Kanäle innerhalb des Gehäuses wird das Vakuum bzw. die Druckluft in Umfangsrichtung sowie in Axialrichtung auf die Außenseite 32 des Filter-Inliners 31 geleitet. Seitlich begrenzt jeweils ein Steg 13, 33 die Weiterleitung des Unterdrucks in Umfangsrichtung, sodass zwei voneinander getrennte Druckbereiche 11, 12 entstehen. Über je eine Bohrung 15 von oben bzw. unten wird Vakuum bzw. Druckluft an das Gehäuse angeschlossen. Das Filterelement ist in seinen Bereichen 11 und 12 mit Druckluft beaufschlagt, sodass der Filter entgegen der Saugrichtung rückgespült werden kann.

### Bezugszeichenliste

- 1: Motor
- 2: Getriebe
- 3: Zuführeinrichtung
- 4: Einzugsgehäuse
- 5: Entgasungsgehäuse
- 6: Anschlussgehäuse
- 7: Schneckenwelle
- 8: Filterelement
- 9: Anschlüsse für Vakuum bzw. Druckluft
- 10: Wasseranschlüsse für Gehäusekühlung
- 11: oberer Druckbereich für Vakuum oder Überdruck
- 12: unterer Druckbereich für Vakuum oder Überdruck
- 13: Steg zur Abtrennung der Druckbereiche 11, 12
- 14: Stützsteg zur mechanischen Stabilisierung
- 15: Durchgangsbohrung zum Vakuumanschluss
- 16: Unterbrechung des Stützstegs zur seitlichen Weiterleitung von Vakuum bzw. Druckluft
- 17: SideFeeder
- 18: vorderes Gehäuseendstück
- 19: hinteres Gehäuseendstück
- 20: Gehäusegrundkörper
- 21: Gehäusebohrung
- 22: Gehäusebohrung
- 23: Drehachse
- 24: Drehachse
- 25: innerer Wandabschnitt des Entgasungsgehäuses
- 26: innerer Wandabschnitt des Entgasungsgehäuses
- 27: innerer Wandabschnitt des Entgasungsgehäuses
- 28: innerer Wandabschnitt des Entgasungsgehäuses
- 29: Schneckenmaschine
- 30: Gehäuse
- 31: Filter-Inliner
- 32: äußere Umfangsfläche Filter-Inliner 31
- 33: (weiterer) Trennsteg
- 34: Entgasungsgehäuse Ringextruder
- 35: Spalt
- 36: innere Oberfläche Filter-Element 8, 31
- 37: innere Oberfläche Gehäuse 30

## Patentansprüche

1. Schneckenmaschine (29)
mit einem Gehäuse (30), das
ein Einzugsgehäuse (4),
ein Entgasungsgehäuse (5) und
wenigstens eine Gehäusebohrung (21, 22) umfasst,
die im Inneren des Entgasungsgehäuses (5) verläuft und
die wenigstens einen inneren Wandabschnitt (25; 26; 27; 28) des Entgasungsgehäuses (5) ausbildet und
die der Aufnahme wenigstens einer Schneckenwelle (7) dient und
wobei der wenigstens eine Wandabschnitt (25; 26; 27; 28) der wenigstens einen Gehäusebohrung (21, 22) im Bereich des Entgasungsgehäuses (5) wenigstens einen in die wenigstens eine Gehäusebohrung (21, 22) ragenden Trennsteg (13, 33) aufweist, und
wobei im Inneren des Entgasungsgehäuses (5) wenigstens ein Filterelement (8) angeordnet ist, das
die wenigstens eine Schneckenwelle (7) wenigstens teilweise umgreift und, das
bereichsweise an dem Trennsteg (13) anliegt
unter Ausbildung von wenigstens zwei räumlichen Druckbereichen (11, 12), die gegeneinander abgedichtet sind, **dadurch gekennzeichnet, dass** das Filterelement (8) als Filter-Inliner (31) ausgestaltet ist, der die wenigstens eine Schneckenwelle (7) über den gesamten Umfang umfasst.

2. Schneckenmaschine nach Anspruch 1 **dadurch gekennzeichnet, dass** das Entgasungsgehäuse (5) wenigstens einen Anschluss (9) zum Zuführen oder Abführen von Vakuum und/oder Druckluft aufweist.

3. Schneckenmaschine nach Anspruch 1 **dadurch gekennzeichnet, dass**
der Druckbereich (11, 12) zur Aufnahme von Vakuum und/oder eines atmosphärischen Überdrucks ausgestaltet ist.

4. Schneckenmaschine nach einem oder mehreren der Ansprüche 1 bis 3 **dadurch gekennzeichnet, dass**
die Schneckenmaschine (29) als Seitenstrombeschickungsmaschine (SideFeeder) (17) ausgestaltet ist.

5. Schneckenmaschine nach Anspruch 4 **dadurch gekennzeichnet, dass**
der SideFeeder (17) ausgestaltet ist, das Schüttgut einer Haupt-Schneckenmaschine zuzuführen.

6. Schneckenmaschine nach Anspruch 5 **dadurch gekennzeichnet, dass**
eine Haupt-Schneckenmaschine eine, zwei oder mehrere Schneckenwellen oder einen Ringextruder ausweist.

7. Schneckenmaschine nach Anspruch 4 **dadurch gekennzeichnet, dass**
die Schneckenmaschine (29, 17) zwei Schneckenwellen (7) aufweist.

8. Schneckenmaschine nach Anspruch 1 **dadurch gekennzeichnet, dass**
die wenigstens eine Schneckenwelle (7) wenigstens einen Förderabschnitt zum Fördern des Schüttguts und wenigstens einen Abschnitt zur Bearbeitung des Schüttguts aufweist.

9. Schneckenmaschine nach einem oder mehreren der Ansprüche 1 bis 8 **dadurch gekennzeichnet, dass**
das Gehäuse (30) ein Anschlussgehäuse (6) aufweist.

10. Schneckenmaschine nach einem oder mehreren der Ansprüche 1 bis 9 **dadurch gekennzeichnet, dass**
die Schneckenmaschine (29, 17) eine Zuführeinrichtung (3) aufweist, über die das Schüttgut in das Einzugsgehäuse (4) zuführbar ist und die stromaufwärts des Entgasungsgehäuses (5) angeordnet ist.

11. Schneckenmaschine nach Anspruch 1 **dadurch gekennzeichnet, dass**
der wenigstens eine Wandabschnitt (25; 26; 27; 28) der wenigstens einen Gehäusebohrung (21, 22) im Bereich des Entgasungsgehäuses (5) zwei beabstandete, in die wenigstens eine Gehäusebohrung (21, 22) ragende Trennstege (13, 33) aufweist und das wenigstens eine Filterelement (8) bereichsweise an den Trennstegen (13, 33) auswechselbar anliegt.

12. Schneckenmaschine nach Anspruch 1 **dadurch gekennzeichnet, dass**
der Filter-Inliner (31) in der wenigstens einen Gehäusebohrung (21, 22) auswechselbar gehalten ist.

13. Schneckenmaschine nach Anspruch 11 **dadurch gekennzeichnet, dass**
im Gehäuse vier Wandabschnitte°(25, 26, 27, 28) angeordnet sind und oben und unten Stützstege°(14) vorgesehen sind, die den einen Wandabschnitt (25) und den anderen Wandabschnitt (26) von dem einen Wandabschnitt (27) und dem anderen Wandabschnitt (28) trennen, wobei der wenigstens eine Stützsteg (14) in die wenigstens eine Gehäusebohrung (21, 22) ragt.

14. Schneckenmaschine nach Anspruch 13 **dadurch gekennzeichnet, dass**
der Stützsteg (14) durch wenigstens eine Unterbrechung (16) unterbrochen ist.

15. Schneckenmaschine nach Anspruch 1 **dadurch gekennzeichnet, dass**
das Entgasungsgehäuse (5) wenigstens einen Wasseranschluss (10) für die Gehäusekühlung aufweist.

16. Schneckenmaschine nach Anspruch 1 **dadurch gekennzeichnet, dass** Druckluft über Kanäle innerhalb des Gehäuses in Umfangsrichtung sowie in Axialrichtung auf die Außenseite (32) des Filterelements (8) bzw. Filter-Inliners (31) geleitet werden kann.

17. Schneckenmaschine nach Anspruch 1 **dadurch gekennzeichnet, dass**
das Filterelement (8) oder der Filter-Inliner (31) Kühlbohrungen aufweist.

18. Schneckenmaschine nach Anspruch 1 **dadurch gekennzeichnet, dass**
das Filtermaterial des Filterelements (8) bzw. des Filter-Inliners (31) poröses Metall aufweist.

19. Schneckenmaschine nach Anspruch 18, bei dem das poröse Metall nicht in einem Sinterprozess hergestellt ist.

20. Schneckenmaschine nach Anspruch 18, bei dem das poröse Metall in einem Sinterprozess hergestellt ist.

21. Schneckenmaschine nach Anspruch 1 **dadurch gekennzeichnet, dass**
das Filtermaterial als Materialien Vliese, Gewebe, Gewirke oder Granulate aufweist.

22. Schneckenmaschine nach Anspruch 1 **dadurch gekennzeichnet, dass**
das Material des Filterelements (8) bzw. des Filter-Inliners (31) im Wege der additiven Fertigung aus Keramik, Metall oder Kunststoff hergestellt ist.

23. Schneckenmaschine nach Anspruch 1 **dadurch gekennzeichnet, dass**
die innere Oberfläche (36) des Filterelements (8) bzw. des Filter-Inliners (31) gegenüber der inneren Oberfläche (37) des Gehäuses (30) um einen Spalt zurückversetzt ist.

24. Verfahren zur Aufbereitung von Schüttgut mittels einer Schneckenmaschine (29;17) nach Anspruch 1, umfassend folgende Schritte:
Bereitstellen der Schneckenmaschine (29, 17)
mit einem Gehäuse (30),
mit mindestens einer in dem Gehäuse (30) ausgebildeten Gehäusebohrung (21, 22),
mindestens einer um die jeweilige Drehachse drehantreibbaren Schneckenwelle (7), die in der zugehörigen Gehäusebohrung (21, 22) angeordnet ist,
einer Zuführeinrichtung (3) zum Zuführen des Schüttguts in das Einzugsgehäuse (4),
einem Entgasungsgehäuse (5) mit wenigstens einem Anschluss (9) für Vakuum bzw. Druckluft und einem Filterelement (8),
und mit wenigstens zwei Druckbereichen (11, 12) durch Zur-Verfügung-Stellung wenigstens eines Steges (13, 33) zur Abtrennung der Druckbereiche (11, 12),
Zuführen von Schüttgut, insbesondere von granulatförmigem und/oder pulverförmigem Schüttgut durch die Zuführeinrichtung (3) in die wenigstens eine Gehäusebohrung (21, 22) über die Zuführeinrichtung (3),
Weitertransport des Schüttguts von dem Einzugsgehäuse (4) in Richtung Entgasungsgehäuse (5) zur Entgasung des zugeführten Schüttguts bzw. zur Druckbeaufschlagung des Filterelements (8), um den Filter entgegen der Saugrichtung rückzuspülen,
Entgasen des Schüttguts in dem Entgasungsgehäuse (5) durch das wenigstens eine Filterelement (8) durch Anlegen von in wenigstens einem der beiden Druckbereichen (11, 12) wirkendem Vakuum, wobei über einen oder mehrere Anschlüsse (9) die durch das Schüttgut mit-eingeschleppte Luft abgesaugt wird,
wobei das wenigstens eine Filterelement (8) verhindert, dass ein Teil des Schüttguts mit abgesaugt wird, und wobei das wenigstens eine Filterelement (8) weiter mit Druckluft beaufschlagt wird, um das Filterelement entgegen der Saugrichtung rückzuspülen, und
Aufbereiten des Schüttguts.

25. Verfahren nach Anspruch 24, **dadurch gekennzeichnet, dass**
das wenigstens eine Filterelement (8) ein Filter-Inliner (31) ist, der auswechselbar in dem Entgasungsgehäuse (5) angeordnet werden kann.

26. Verfahren nach Anspruch 24, **dadurch gekennzeichnet, dass**
das Vakuum oder die Druckluft auf die Außenseite des Filterelements (8) über Kanäle innerhalb des Gehäuses in Umfangsrichtung sowie in Axialrichtung geleitet wird.

27. Verfahren nach Anspruch 24, **dadurch gekennzeichnet, dass**
die Druckbereiche (11, 12) abwechselnd mit Vakuum beaufschlagt werden und an dem jeweils anderen Druckbereich eine Rückspülung ermöglicht wird.

28. Verfahren nach Anspruch 24, **dadurch gekennzeichnet, dass**
die innere Oberfläche (36) des Filterelements (8) bzw. des Filter-Inliners (31) gegenüber der inneren Oberfläche (37) des Gehäuses (30) um einen Spalt zurückversetzt ist.

## Claims

1. A screw machine (29)
having a housing (30) comprising
a feed housing (4),
a degassing housing (5), and
at least one housing bore (21, 22)
extending inside the degassing housing (5) and
forming at least one inner wall section (25; 26; 27; 28) of the degassing housing (5)
for accommodating at least one screw shaft (7) and
wherein the at least one wall section (25; 26; 27; 28) of the at least one housing bore (21, 22), in the region of the degassing housing (5), has at least one separating web (13, 33) protruding into the least one housing bore (21, 22), and
wherein, within the degassing housing (5), at least one filter element (8) is disposed that at least partially encompasses the at least one screw shaft (7) and that,
in parts, is adjacent to the separating web (13)
forming at least two spatial pressure areas (11, 12) sealed against each other, **characterized in that** the filter element (8) is configured as a filter liner (31) surrounding the at least one screw shaft (7) along the entire circumference.

2. The screw machine of claim 1, **characterized in that**
the degassing housing (5) has at least one connector (9) for supplying or removing vacuum and/or compressed air.

3. The screw machine of claim 1, **characterized in that**
the pressure area (11, 12) is configured to receive a vacuum and/or an atmospheric excess pressure.

4. The screw machine of any of claims 1 to 3, **characterized in that**
the screw machine (29) is configured as a side stream feeding machine (SideFeeder) (17).

5. The screw machine of claim 4, **characterized in that**
the SideFeeder (17) is configured to feed the bulk material to a main screw machine.

6. The screw machine of claim 5, **characterized in that**
a main screw machine has one, two or more screw shafts or a ring extruder.

7. The screw machine of claim 4, **characterized in that**
the screw machine (29, 17) has two screw shafts (7).

8. The screw machine of claim 1, **characterized in that**
the at least one screw shaft (7) has at least one conveying section for conveying the bulk material and at least one section for processing the bulk material.

9. The screw machine of any of claims 1 to 8, **characterized in that**
the housing (30) has a connection housing (6).

10. The screw machine of any of claims 1 to 9, **characterized in that**
the screw machine (29, 17) has a feed device (3) through which the bulk material is feedable into the feed housing (4) and which is disposed upstream of the degassing housing (5).

11. The screw machine of claim 1, **characterized in that**
the at least one wall section (25; 26; 27; 28) of the at least one housing bore (21, 22), in the area of the degassing housing (5), has two spaced separating webs (13, 33) protruding into the at least one housing bore (21, 22) and the at least one filter element (8), in parts, is replaceably adjacent to the separating webs (13, 33).

12. The screw machine of claim 1, **characterized in that**
the filter liner (31) is retained replaceably in the at least one housing bore (21, 22).

13. The screw machine of claim 11, **characterized in that**
in the housing, four wall sections (25, 26, 27, 28) are disposed and support webs (14) are provided at the top and at the bottom that separate the one wall section (25) and the other wall section (26) from the one wall section (27) and the other wall section (28), the at least one support web (14) protruding into the at least one housing bore (21, 22).

14. The screw machine of claim 13, **characterized in that**
the support web (14) is interrupted by at least one interruption (16).

15. The screw machine of claim 1, **characterized in that**
the degassing housing (5) has at least one water connector (10) for cooling the housing.

16. The screw machine of claim 1, **characterized in that**
compressed air can be directed through passages within the housing in circumferential direction as well as in axial direction to the outer side (32) of the filter element (8) and/or the filter liner (31).

17. The screw machine of claim 1, **characterized in that**
the filter element (8) or the filter liner (31) have cooling bores.

18. The screw machine of claim 1, **characterized in that**
the filter material of the filter element (8) and/or the filter liner (31) has porous metal.

19. The screw machine of claim 18, wherein the porous metal is not produced in a sintering process.

20. The screw machine of claim 18, wherein the porous metal is produced in a sintering process.

21. The screw machine of claim 1, **characterized in that**
the materials of the filter material include non-woven fabrics, woven fabrics, knitted fabrics or granulates.

22. The screw machine of claim 1, **characterized in that**
the material of the filter element (8) and/or the filter liner (31) is produced from ceramic, metal, or plastic material by means of additive manufacturing.

23. The screw machine of claim 1, **characterized in that**
the inner surface (36) of the filter element (8) and/or the filter liner (31) is recessed from the inner surface (37) of the housing (30) by a gap.

24. A method for processing bulk material using a screw machine (29; 17) of claim 1, comprising the following steps:
providing the screw machine (29, 17)
having a housing (30),
having at least one housing bore (21, 22) formed in the housing (30),
at least one screw shaft (7) rotationally drivable about the respective axis of rotation and disposed in the associated housing bore (21, 22),
a feed device (3) for feeding the bulk material into the feed housing (4),
a degassing housing (5) having at least one connector (9) for vacuum and/or compressed air and a filter element (8),
and having at least two pressure areas (11, 12) by providing at least one web (13, 33) for separation of the pressure areas (11, 12),
feeding of bulk material, in particular of bulk material in the form of granulate and/or powder through the feed device (3) into the at least one housing bore (21, 22) via the feed device (3),
conveying the bulk material from the feed housing (4) towards the degassing housing (5) for degassing the fed bulk material and/or pressurizing the filter element (8) for backflushing the filter in a direction opposite the suction direction,
degassing the bulk material in the degassing housing (5) by the at least one filter element (8) by applying a vacuum acting on at least one of the two pressure areas (11, 12), in which the air dragged in with the bulk material is drawn off through one or more connectors (9),
wherein the at least one filter element (8) prevents a portion of the bulk material from being drawn off as well, and wherein the at least one filter element (8) is continued to be pressurized to backflush the filter element in a direction opposite the suction direction and
processing the bulk material.

25. The method of claim 24, **characterized in that**
the at least one filter element (8) is a filter liner (31) that is replaceably disposable in the degassing housing (5).

26. The method of claim 24, **characterized in that**
the vacuum or the compressed air is directed to the outer side of the filter element (8) through passages within the housing in circumferential direction as well as in axial direction.

27. The method of claim 24, **characterized in that**
the vacuum is applied alternately to the pressure areas (11, 12) and backflushing is enabled in the respective other pressure area.

28. The method of claim 24, **characterized in that**
the inner surface (36) of the filter element (8) and/or the filter liner (31) is recessed from the inner surface (37) of the housing (30) by a gap.

## Revendications

1. Machine à vis sans fin (29)
avec un boîtier (30) qui comprend
un boîtier d'alimentation (4),
un boîtier de dégazage (5) et
au moins un alésage de boîtier (21, 22)
qui s'étend à l'intérieur du boîtier de dégazage (5) et
qui forme au moins une section de paroi intérieure (25 ; 26 ; 27 ; 28) du boîtier de dégazage (5) et
qui sert à recevoir au moins un arbre de vis sans fin (7) et
dans lequel l'au moins une section de paroi (25 ; 26 ; 27 ; 28) de l'au moins un alésage de boîtier (21, 22) présente, dans la zone du boîtier de dégazage (5), au moins une nervure de séparation (13, 33) pénétrant dans l'au moins un alésage de boîtier (21, 22), et
dans lequel, à l'intérieur du boîtier de dégazage (5), est disposé au moins un élément filtrant (8) qui
entoure au moins partiellement l'au moins un arbre de vis sans fin (7) et qui s'applique par zones contre la nervure de séparation (13)
en formant au moins deux zones de pression spatiales (11, 12) qui sont étanches l'une par rapport à l'autre,
**caractérisée en ce que** l'élément filtrant (8) est conçu comme un inliner de filtre (31) qui entoure l'au moins un arbre de vis sans fin (7) sur toute la circonférence.

2. Machine à vis sans fin selon la revendication 1, **caractérisée en ce que**
le boîtier de dégazage (5) présente au moins un raccord (9) pour l'amenée ou l'évacuation de vide et/ou d'air comprimé.

3. Machine à vis sans fin selon la revendication 1, **caractérisée en ce que**
la zone de pression (11, 12) est conçue pour recevoir le vide et/ou une surpression atmosphérique.

4. Machine à vis sans fin selon une ou plusieurs des revendications 1 à 3, **caractérisée en ce que**
la machine à vis sans fin (29) est conçue comme une machine d'alimentation à flux latéral (SideFeeder) (17).

5. Machine à vis sans fin selon la revendication 4, **caractérisée en ce que**
le SideFeeder (17) est conçu pour amener le produit en vrac à une machine principale à vis sans fin.

6. Machine à vis sans fin selon la revendication 5, **caractérisée en ce qu'**
une machine principale à vis sans fin présente un, deux ou plusieurs arbres de vis sans fin ou une extrudeuse annulaire.

7. Machine à vis sans fin selon la revendication 4, **caractérisée en ce que**
la machine à vis sans fin (29, 17) présente deux arbres de vis sans fin (7).

8. Machine à vis sans fin selon la revendication 1, **caractérisée en ce que**
l'au moins un arbre de vis sans fin (7) présente au moins une section de transport pour transporter le produit en vrac et au moins une section pour traiter le produit en vrac.

9. Machine à vis sans fin selon une ou plusieurs des revendications 1 à 8, **caractérisée en ce que**
le boîtier (30) présente un boîtier de raccordement (6).

10. Machine à vis sans fin selon une ou plusieurs des revendications 1 à 9, **caractérisée en ce que**
la machine à vis sans fin (29, 17) présente un dispositif d'alimentation (3) par lequel le produit en vrac peut être amené dans le boîtier d'alimentation (4) et qui est disposé en amont du boîtier de dégazage (5).

11. Machine à vis sans fin selon la revendication 1, **caractérisée en ce que**
l'au moins une section de paroi (25 ; 26 ; 27 ; 28) de l'au moins un alésage de boîtier (21, 22) présente, dans la zone du boîtier de dégazage (5), deux nervures de séparation (13, 33) espacées, pénétrant dans l'au moins un alésage de boîtier (21, 22), et l'au moins un élément filtrant (8) s'applique par zones contre les nervures de séparation (13, 33) de manière interchangeable.

12. Machine à vis sans fin selon la revendication 1, **caractérisée en ce que**
l'inliner de filtre (31) est maintenu de manière interchangeable dans l'au moins un alésage de boîtier (21, 22).

13. Machine à vis sans fin selon la revendication 11, **caractérisée en ce que**
quatre sections de paroi (25, 26, 27, 28) sont disposées dans le boîtier et **en ce qu'**il est prévu en haut et en bas des nervures d'appui (14) qui séparent l'une section de paroi (25) et l'autre section de paroi (26) de l'une section de paroi (27) et de l'autre section de paroi (28), l'au moins une nervure d'appui (14) pénétrant dans l'au moins un alésage de boîtier (21, 22).

14. Machine à vis sans fin selon la revendication 13, **caractérisée en ce que**
la nervure d'appui (14) est interrompue par au moins une interruption (16).

15. Machine à vis sans fin selon la revendication 1, **caractérisée en ce que**
le boîtier de dégazage (5) présente au moins un raccord d'eau (10) pour le refroidissement du boîtier.

16. Machine à vis sans fin selon la revendication 1, **caractérisée en ce que**
de l'air comprimé peut être dirigé par des canaux à l'intérieur du boîtier dans la direction circonférentielle ainsi que dans la direction axiale sur le côté extérieur (32) de l'élément filtrant (8) ou de l'inliner de filtre (31).

17. Machine à vis sans fin selon la revendication 1, **caractérisée en ce que**
l'élément filtrant (8) ou l'inliner de filtre (31) présente des alésages de refroidissement.

18. Machine à vis sans fin selon la revendication 1, **caractérisée en ce que**
le matériau filtrant de l'élément filtrant (8) ou de l'inliner de filtre (31) présente un métal poreux.

19. Machine à vis sans fin selon la revendication 18, dans laquelle le métal poreux n'est pas fabriqué par un procédé de frittage.

20. Machine à vis sans fin selon la revendication 18, dans laquelle le métal poreux est fabriqué par un procédé de frittage.

21. Machine à vis sans fin selon la revendication 1, **caractérisée en ce que**
le matériau filtrant présente comme matériaux des non-tissés, des tissus, des tricots ou des granulés.

22. Machine à vis sans fin selon la revendication 1, **caractérisée en ce que**
le matériau de l'élément filtrant (8) ou de l'inliner de filtre (31) est fabriqué en céramique, en métal ou en matière plastique par voie additive.

23. Machine à vis sans fin selon la revendication 1, **caractérisée en ce que**
la surface intérieure (36) de l'élément filtrant (8) ou de l'inliner de filtre (31) est en retrait d'une fente par rapport à la surface intérieure (37) du boîtier (30).

24. Procédé de préparation de produits en vrac au moyen d'une machine à vis sans fin (29 ; 17) selon la revendication 1, comprenant les étapes suivantes :
Mise à disposition de la machine à vis sans fin (29, 17)
avec un boîtier (30),
avec au moins un alésage de boîtier (21, 22) formé dans le boîtier (30),
au moins un arbre à vis sans fin (7) pouvant être entraîné en rotation autour de l'axe de rotation respectif, qui est disposé dans l'alésage de boîtier (21, 22) correspondant,
un dispositif d'alimentation (3) pour amener le produit en vrac dans le boîtier d'alimentation (4),
un boîtier de dégazage (5) avec au moins un raccord (9) pour le vide ou l'air comprimé et un élément filtrant (8),
et avec au moins deux zones de pression (11, 12) par la mise à disposition d'au moins une nervure (13, 33) pour la séparation des zones de pression (11, 12),
Amenée de produits en vrac, en particulier de produits en vrac granuleux et/ou pulvérulents par le dispositif d'alimentation (3) dans l'au moins un alésage de boîtier (21, 22) par l'intermédiaire du dispositif d'alimentation (3),
Poursuite du transport du produit en vrac depuis le boîtier d'alimentation (4) en direction du boîtier de dégazage (5) pour dégazer le produit en vrac amené ou pour mettre sous pression l'élément filtrant (8) afin de rétrolaver le filtre dans le sens opposé au sens d'aspiration,
Dégazage du produit en vrac dans le boîtier de dégazage (5) à travers l'au moins un élément filtrant (8) par application d'un vide agissant dans au moins l'une des deux zones de pression (11, 12), l'air entraîné par le produit en vrac étant aspiré par un ou plusieurs raccords (9),
dans lequel l'au moins un élément filtrant (8) empêche qu'une partie du produit en vrac soit aspirée en même temps, et dans lequel l'au moins un élément filtrant (8) est en outre soumis à de l'air comprimé afin de rétrolaver l'élément filtrant dans le sens opposé au sens d'aspiration, et
Préparation du produit en vrac.

25. Procédé selon la revendication 24, **caractérisé en ce que**
l'au moins un élément filtrant (8) est un inliner de filtre (31) qui peut être disposé de manière interchangeable dans le boîtier de dégazage (5).

26. Procédé selon la revendication 24, **caractérisé en ce que**
le vide ou l'air comprimé est dirigé vers le côté extérieur de l'élément filtrant (8) par des canaux à l'intérieur du boîtier dans la direction circonférentielle ainsi que dans la direction axiale.

27. Procédé selon la revendication 24, **caractérisé en ce que**
les zones de pression (11, 12) sont soumises alternativement au vide et qu'un rétrolavage est rendu possible sur l'autre zone de pression respective.

28. Procédé selon la revendication 24, **caractérisé en ce que**
la surface intérieure (36) de l'élément filtrant (8) ou de l'inliner de filtre (31) est en retrait d'une fente par rapport à la surface intérieure (37) du boîtier (30).
